# EUROPEAN PATENT SPECIFICATION

(11) **EP 3 339 916 B1**
(45) Date of publication and mention of the grant of the patent: **20.01.2021**
(21) Application number: 18151071.0
(22) Date of filing: 28.04.2017
(51) Int. Cl.: G02B 3/00, F21S 41/265

(54) **PLASTIC COMPOUND LENS FOR HEADLIGHT**
KUNSTSTOFFVERBUNDLINSE FÜR SCHEINWERFER
LENTILLE COMPOSÉE EN PLASTIQUE POUR PHARE

(30) Priority: 08.07.2016 KR 20160086930
(43) Date of publication of application: 27.06.2018
(62) Divisional of application: 17168715.5
(73) Proprietor: Eun, Hyun-Su, Gyeongsan-si, Gyeongsangbuk-do 38539 (KR)
(72) Inventor: Eun, Hyun-Su, Gyeongsan-si, Gyeongsangbuk-do 38539 (KR)
(74) Representative: Sach, Greg Robert

(56) References cited:
- DE-A1-102015 209 194
- GB-A- 490 381
- JP-A- 2010 008 559
- KR-B1- 101 614 684
- US-A1- 2011 235 337

## Description

### BACKGROUND

### 1. Technical Field

The present invention relates generally to a plastic compound lens for a headlight, and more particularly to a plastic compound lens for a headlight, which is capable of correcting chromatic aberration.

### 2. Description of the Related Art

In general, vehicles have various types of lighting devices. Among these lighting devices, headlights are important lighting devices that ensure the visual field of a driver for driving at night. In connection with this, Korean Patent Application Publication No. 2003-0048708 discloses a headlight structure for a vehicle.

Aspherical lenses formed by molding and machining glass are used for conventional headlights for vehicles. Glass lenses have the disadvantage of heavier weights, lower productivity and higher manufacturing costs than plastic lenses. Recently, as lamps used for headlights are replaced with LED lamps, it is urgent to deal with this trend by using plastic lenses having cost competitiveness. However, plastic lenses suffer from the occurrence of serious chromatic aberration when white light is generated, and this problem cannot be easily overcome.

Furthermore, plastic lenses have lower stiffness than glass lenses. When a polycarbonate material is used to deal with such low stiffness, stiffness can be compensated for. However, the plastic lenses have considerably lower Abbe's numbers than glass lenses, and thus the plastic lenses have the disadvantage of having an insufficient function as optical components.

Furthermore, when lenses are manufactured using an acrylic material, which is a general plastic optical material, stiffness is low, and thus a yellowing phenomenon may occur when they are exposed to the ultraviolet rays of LED lamps.

KR 2015/0123031 A discloses a plastic achromatic lens for a headlight, which includes a light entering lens part which has a horizontal light entering surface which light enters, a concave lens surface which light exits, and is made of a first material with optical properties corresponding to flint glass; a light exiting lens part which has a convex aspherical lens surface which is combined with the concave lens surface of the light entering lens part and emits light and is made of a second material with optical properties corresponding to crown glass.

### SUMMARY

The present invention is set out in the appended set of claims.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a sectional view showing the sectional configuration of a plastic compound lens according to an example useful for understanding the present invention;
FIGS. 2 and 3 are diagrams showing modifications of the plastic compound lens according to the example useful for understanding the present invention;
FIG. 4 is a diagram showing an example of the sectional configuration of a plastic compound lens according to an example useful for understanding the present invention; and
FIG. 5 is a diagram showing an example of the sectional configuration of a plastic compound lens according to an embodiment of the present invention.

### DETAILED DESCRIPTION

A preferred embodiment of the present invention will be described with reference to the accompanying drawings in order to provide complete understanding of the present invention. The embodiment is provided to fully describe the present invention to those having ordinary knowledge in the art to which the present invention pertains. Accordingly, the shapes, sizes and the like of components in the drawings may be exaggerated to make the description obvious. It should be noted that the same components may be designated by the same reference symbols throughout the drawings. Descriptions of well-known functions and configurations that are determined to unnecessarily make the gist of the present invention to be obscure will be omitted.

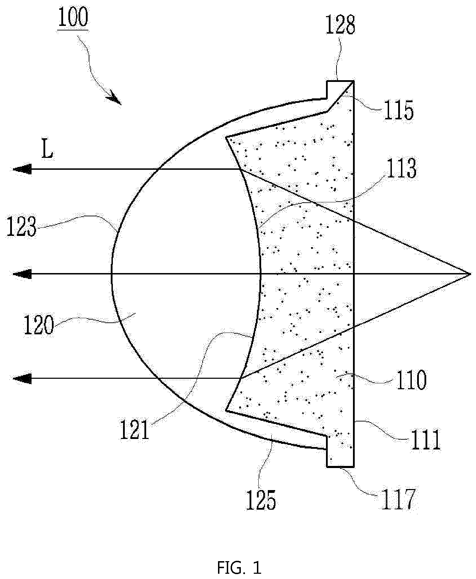

FIG. 1 is a sectional view showing the sectional configuration of a plastic compound lens 100 according to an example useful for understanding the present invention.

As shown in the drawing, the plastic compound lens 100 is combined into and used in a headlight for a vehicle. The plastic compound lens 100 includes a first lens part 110 configured such that light is incident thereon from a light source (not shown) inside a headlight (not shown), and a second lens part 120 combined with the first lens part 110 and configured to emit light to the outside.

The first lens part 110 includes a first light-incident surface 111 configured such that light is incident thereon from the light source for a headlight, a first shaped surface 113 formed to be spaced apart from the first light-incident surface 111 by predetermined distances and to be curved toward the first light-incident surface 111, and a side inclined surface 115 inserted into the second lens part 120.

In this case, the first lens part 110 is made of a first material having the optical characteristics of flint glass, whereas the second lens part 120 is made of a second material having the optical characteristics of crown glass. As an example, the first lens part 110 may be made of a polycarbonate (PC) material, whereas the second lens part 120 may be made of an acrylic material (polymethyl methacrylate (PMMA)).

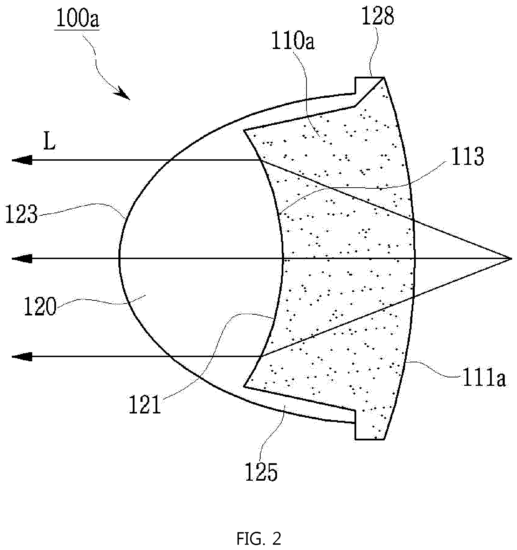

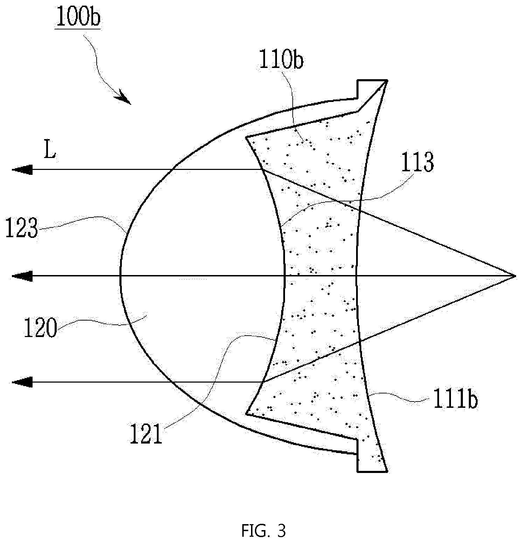

The first light-incident surface 111 may be formed in a flat shape, as shown in FIG. 1, may be formed in a convex shape, as shown in FIG. 2, and may be formed in a concave shape, as shown in FIG. 3.

The first shaped surface 113 may be formed in the shape of a surface of a concave lens, as shown in the drawing. In some cases, the first shaped surface 113 may be formed in the shape of a surface of a convex lens, an aspherical lens, or an aspherical lens having an inflection point.

The optical shapes of the first light-incident surface 111 and the first shaped surface 113 may vary in various manners depending on the optical design by which light is incident and emitted, the manufacturing method by which two different materials are combined with each other, etc.

The second lens part 120 has an inside shaped surface 121 coupled onto the first shaped surface 113, and an outside convex-shaped surface 123 formed in a convex shape in a direction opposite the direction of the inside shaped surface 121 and configured to emit light to the outside.

In this case, the plastic compound lens 100 is configured in the form in which the second lens part 120 surrounds all the regions of the first lens part 110 except for the first light-incident surface 111 of the first lens part 110.

In other words, the second lens part 120 is formed in a half-elliptic sectional shape, and has, on the bottom thereof, the inside shaped surface 121 formed to correspond to the first shaped surface 113. Furthermore, a coupling periphery 125 extending toward the first light-incident surface 111 in a ring shape is provided along the edge of the inside shaped surface 121. The first lens part 110 is inserted into a space that is formed beside the inside shaped surface 121 inside the coupling periphery 125.

The outside convex-shaped surface 123 is formed in the shape of a surface of a convex aspherical lens or an aspherical lens including an inflection point.

The first coupling protrusion 117 and the second coupling protrusion 128 protrude from the bottoms of the first lens part 110 and the second lens part 120. The first coupling protrusion 117 and the second coupling protrusion 128 are coupled to the flange of the headlight, thereby fastening the plastic compound lens 100 onto a vehicle.

The plastic compound lens 100 is configured such that the first shaped surface 113 and the inside shaped surface 121 on which the second lens part 120 is combined with the first lens part 110 are concealed inside the plastic compound lens 100, thereby reducing defect rate and providing a neat appearance and uniform optical characteristics.

Furthermore, plastic compound lenses 100, 100a and 100b are each configured such that a first lens part 110 and a second lens part 120 made of a first material and a second material, respectively, having the optical characteristics of flint glass and the optical characteristics of crown glass, respectively, are combined with each other and a first shaped surface 113 and an inside shaped surface 121 are combined and come into contact with each other, as shown in FIGS. 1, 2 and 3, thereby being also utilized as an achromatic lens that is composed of two lens superimposed on each other to correct chromatic aberration.

Furthermore, the polycarbonate material and the acrylic material are used together, and thus effects are achieved in that low stiffness, i.e., the weak point of the acrylic material, can be compensated for and a yellowing phenomenon can be reduced.

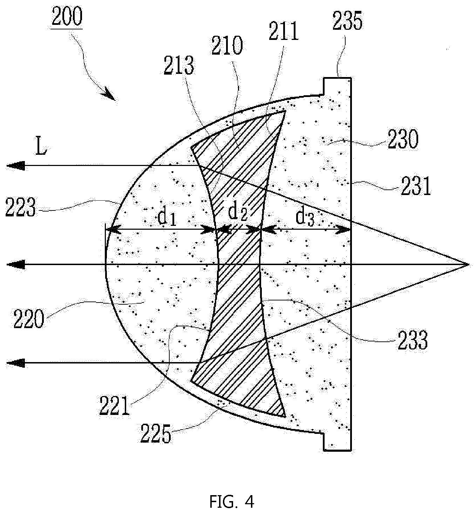

Meanwhile, FIG. 4 is a diagram showing an example of the sectional configuration of a plastic compound lens 200 according to an example useful for understanding the present invention.

The plastic compound lens 100 is configured such that the first lens part 110 and second lens part 120 made of different materials are combined with each other. In contrast, the plastic compound lens 200 is configured such that a first lens part 210, a second lens part 220, and a third lens part 230 are disposed in a superimposed manner.

In this case, the third lens part 230, the first lens part 210, and the second lens part 220 are sequentially disposed from a light source for a headlight (not shown). The light incident on the third lens part 230 passes through the first lens part 210, and is emitted to the outside via the second lens part 220.

The configurations of the first lens part 210 and the second lens part 220 correspond to the configurations of the first lens part 110 and second lens part 120 of the plastic compound lens 100, 100a or 100b, respectively.

The third lens part 230 includes a second light-incident surface 231 configured such that light is incident thereon, a light-incident surface-coupled surface 233 coupled onto the first light-incident surface 211, and a coupling periphery 235 fastened to the flange (not shown) of the headlight.

The second light-incident surface 231 may be formed as a flat, concave, or convex surface and may be formed as an aspherical surface or an aspherical surface including an inflection point in the same manner as the above-described first light-incident surface 211.

The light-incident surface-coupled surface 233 may be formed to correspond to the shape of the first light-incident surface 211. In other words, as shown in FIG. 4, when the first light-incident surface 211 is concave, the light-incident surface-coupled surface 233 is formed in a convex shape. In contrast, when the first light-incident surface 211 is convex, the light-incident surface-coupled surface 233 is formed in a concave shape.

In this case, in the plastic compound lens 200 according to the other embodiment of the present invention, the second lens part 220 is integrated with the third lens part 230. A connection region 225 extending across the edge of the second lens part 220 is formed to surround the first lens part 210 while extending to the third lens part 230.

The second lens part 220 and the third lens part 230 may be made of the same material, whereas the first lens part 210 may be made of a different material. In this case, the second lens part 220 and the third lens part 230 may be made of a polycarbonate (PC) material, whereas the first lens part 210 may be made of an acrylic material (PMMA). Inversely, the second lens part 220 and the third lens part 230 may be made of an acrylic material (PMMA), whereas the first lens part 210 may be made of a polycarbonate (PC) material.

When the first lens part 210 is made of a polycarbonate (PC) material and the second lens part 220 and third lens part 230 made of an acrylic material (PMMA) surround the first lens part 210, the plastic compound lens 200 may be also utilized as an apochromatic lens.

In this case, the thickness d2 of the first lens part 210, the thickness d1 of the second lens part 220, and the thickness d3 of the third lens part 230 are set by taking into consideration the distance to the light source, the material of the first lens part 210 and the second lens part 220, and the material of the third lens part 230 within a range that can minimize chromatic aberration.

The apochromatic lens is formed by superimposing three lenses having different refractive indices on each other, and has the advantage of eliminating almost all chromatic aberration compared to the case where the first lens part 110 and the second lens part 120 are combined and utilized as an achromatic lens.

Meanwhile, although the second lens part 220 and the third lens part 230 are made of the same material in an integrated manner and the first lens part 210 is made of a different material in the other example useful for understanding the present invention, this is merely an example. In some cases, the first lens part 210, the second lens part 220, and the third lens part 230 may be made of different materials, respectively.

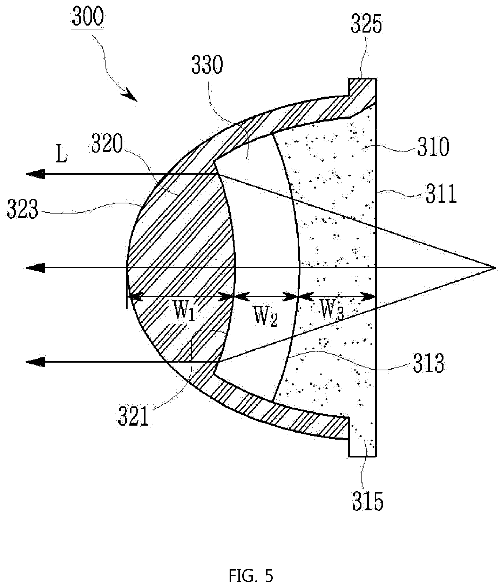

Meanwhile, FIG. 5 is a diagram schematically showing the sectional configuration of a plastic compound lens 300 according to an embodiment of the present invention.

The plastic compound lenses 100, 100a and 100b according to the above-described example useful for understanding the invention are each formed such that the first lens part 110 and the second lens part 120 are combined and come into contact with each other. In contrast, in the plastic compound lens 300 according to the embodiment, a separation space 330 is formed between the first lens part 310 and the second lens part 320, as shown in FIG. 5.

The configurations of the first lens part 310 and the second lens part 320 correspond to the configurations of the first lens part 110 and second lens part 120 of each of the plastic compound lenses 100, 100a and 100b.

The separation space 330 separates the first shaped surface 313 of the first lens part 310 from the inside shaped surface 321 of the second lens part 320 by a predetermined distance W2. The separation space 330 is formed as an empty space. The separation space 330 formed as an empty space enables the first shaped surface 313 and the inside shaped surface 321 to function as a surface of an independent concave lens and a surface of an independent convex lens, respectively. Accordingly, the plastic compound lens 300 exhibits an effect corresponding to that of an achromatic lens in which the first lens part 310 and second lens part 320 made of different materials are combined together, or an effect corresponding to that of an apochromatic lens in which three lenses are combined together in the actual correction of chromatic aberration.

The distance W2 of the separation space 330 is set by taking into consideration the thickness W3 of the first lens part 310, the thickness W1 of the second lens part 320, the materials of the first lens part 310 and second lens part 320, the distance to a light source, etc. within a range that can minimize chromatic aberration.

As described above, the plastic compound lens according to the present invention is configured such that the two lenses made of different materials are combined together and utilized as an achromatic lens, thereby being capable of correcting chromatic aberration. Furthermore, the plastic compound lens according to the present invention is formed by combining an acrylic material and a polycarbonate material, and thus low stiffness, i.e., a problem of the conventional plastic lens, can be compensated for and also a yellowing phenomenon can be minimized.

Furthermore, the separation space is contained in or the third lens part is added to the plastic compound lens according to the present invention, thereby providing an effect corresponding to that of an apochromatic lens. Accordingly, the effect of eliminating almost all chromatic aberration is achieved.

The above-described embodiment of the plastic compound lens for a headlight according to the present invention is merely illustrative. Accordingly, it will be apparently understood that the present invention is defined by the attached claims.

## Claims

1. A plastic compound lens (300) for a headlight, comprising:
a first lens part (310) adapted to include a first light-incident surface (311) on which light is incident and a first shaped surface (313) through which the light is emitted, and made of a first material; and
a second lens part (320) adapted to include an inside shaped surface (321) which is coupled onto the first shaped surface (313), and an outside convex-shaped surface (323) which is formed in a convex shape in a direction opposite the inside shaped surface (321) and which emits the light, incident through the first lens part (310), to an outside, and made of a second material;
wherein the second lens part (320) extends to the first light-incident surface (311) of the first lens part (310) to surround the first lens part (310);
**characterized in that** the first light-incident surface (311) of the first lens part (310) is formed as an aspherical surface including an inflection point;
wherein the outside convex-shaped surface (323) of the second lens part (320) is formed as an aspherical surface including an inflection point;
wherein the first shaped surface (313) of the first lens part (310) is formed as an aspherical surface including an inflection point;
wherein the inside shaped surface (321) of the second lens part (320) is formed as an aspherical surface including an inflection point to correspond to the first shaped surface (313) of the first lens part (310); and
wherein a separation space (330) configured to correct chromatic aberration is formed by separating the first shaped surface (313) of the first lens part (310) and the inside shaped surface (321) of the second lens part (320) from each other by a predetermined distance.

2. The plastic compound lens of claim 1, wherein the first material is a material having optical characteristics corresponding to those of flint glass, and the second material is a material having optical characteristics corresponding to those of crown glass.

3. The plastic compound lens of claim 1, wherein the first material is a material having optical characteristics corresponding to those of crown glass, and the second material is a material having optical characteristics corresponding to those of flint glass.

## Patentansprüche

1. Kunststoffverbundlinse (300) für einen Scheinwerfer, umfassend:
einen ersten Linsenteil (310), der angepasst ist, um eine erste Lichteinfallfläche (311), auf welche Licht einfällt, und eine erste geformte Fläche (313), durch die das Licht emittiert wird, aufzunehmen, und aus einem ersten Material besteht; und
einen zweiten Linsenteil (320), der angepasst ist, um eine geformte Innenfläche (321), die mit der ersten geformten Fläche (313) gekoppelt ist, und eine konvex geformte Außenfläche (323), die in einer konvexen Form in einer Richtung gegenüber der geformten Innenfläche (321) ausgebildet ist, und die das durch den ersten Linsenteil (310) einfallende Licht nach außen emittiert, aufzunehmen und aus einem zweiten Material besteht;
wobei sich der zweite Linsenteil (320) bis zur ersten Lichteinfallfläche (311) des ersten Linsenteils (310) erstreckt, um den ersten Linsenteil (310) zu umgeben;
**dadurch gekennzeichnet, dass** die erste Lichteinfallfläche (311) des ersten Linsenteils (310) als asphärische Fläche mit einem Wendepunkt ausgebildet ist;
wobei die konvex geformte Außenfläche (323) des zweiten Linsenteils (320) als asphärische Fläche mit einem Wendepunkt ausgebildet ist;
wobei die erste geformte Fläche (313) des ersten Linsenteils (310) als asphärische Fläche mit einem Wendepunkt ausgebildet ist;
wobei die geformte Innenfläche (321) des zweiten Linsenteils (320) als asphärische Fläche mit einem Wendepunkt ausgebildet ist, der der ersten geformten Fläche (313) des ersten Linsenteils (310) entspricht; und
wobei ein Trennraum (330), der konfiguriert ist, um eine chromatische Aberration zu korrigieren, gebildet ist, indem die erste geformte Fläche (313) des ersten Linsenteils (310) und die geformte Innenfläche (321) des zweiten Linsenteils (320) voneinander um einen vorgegebenen Abstand getrennt werden.

2. Kunststoffverbundlinse nach Anspruch 1, wobei das erste Material ein Material mit optischen Eigenschaften ist, die denen von Flintglas entsprechen, und das zweite Material ein Material mit optischen Eigenschaften ist, die denen von Kronglas entsprechen.

3. Kunststoffverbundlinse nach Anspruch 1, wobei das erste Material ein Material mit optischen Eigenschaften ist, die denen von Kronglas entsprechen, und das zweite Material ein Material mit optischen Eigenschaften ist, die denen von Flintglas entsprechen.

## Revendications

1. Lentille composée en plastique (300) pour un phare, comprenant:
une première partie de lentille (310) adaptée pour inclure une première surface incidente de lumière (311) sur laquelle la lumière est incidente et une première surface formée (313) à travers laquelle la lumière est émise, et constituée d'un premier matériau; et
une seconde partie de lentille (320) adaptée pour inclure une surface formée intérieure (321) qui est couplée sur la première surface formée (313), et une surface extérieure de forme convexe (323) qui est formée dans une forme convexe dans une direction opposée la surface formée à l'intérieur (321) et qui émet la lumière, incidente à travers la première partie de lentille (310), vers un extérieur, et constituée d'un second matériau;
dans laquelle la seconde partie de lentille (320) s'étend jusqu'à la première surface incidente de lumière (311) de la première partie de lentille (310) pour entourer la première partie de lentille (310);
**caractérisé en ce que** la première surface incidente de lumière (311) de la première partie de lentille (310) est formée comme une surface asphérique comprenant un point d'inflexion;
dans laquelle la surface extérieure de forme convexe (323) de la seconde partie de lentille (320) est formée comme une surface asphérique comprenant un point d'inflexion;
dans laquelle la première surface formée (313) de la première partie de lentille (310) est formée comme une surface asphérique comprenant un point d'inflexion;
dans laquelle la surface formée intérieure (321) de la seconde partie de lentille (320) est formée comme une surface asphérique comprenant un point d'inflexion pour correspondre à la première surface formée (313) de la première partie de lentille (310); et
dans laquelle un espace de séparation (330) configuré pour corriger l'aberration chromatique est formé en séparant la première surface formée (313) de la première partie de lentille (310) et la surface formée intérieure (321) de la seconde partie de lentille (320) l'une de l'autre d'une distance prédéterminée.

2. Lentille composée en plastique selon la revendication 1, dans laquelle le premier matériau est un matériau ayant des caractéristiques optiques correspondant à celles du verre silex, et le second matériau est un matériau ayant des caractéristiques optiques correspondant à celles du verre couronne.

3. Lentille composée en plastique selon la revendication 1, dans laquelle le premier matériau est un matériau ayant des caractéristiques optiques correspondant à celles du verre couronne, et le deuxième matériau est un matériau ayant des caractéristiques optiques correspondant à celles du verre silex.
